# EUROPEAN PATENT APPLICATION

(11) **EP 1 734 356 A1**
(43) Date of publication of application: **20.12.2006**
(21) Application number: 06012038.3
(22) Date of filing: 12.06.2006
(51) Int. Cl.: G01N 1/34, B01L 3/00, G01N 30/00

(54) **Column, sample preparation apparatus using the column, and auto analyzer**

(30) Priority: 13.06.2005 JP 2005172501
(71) Applicant: SYSMEX CORPORATION, Kobe-shi, Hyogo 651-0073 (JP)
(72) Inventor: Kobayashi, Hironori, Kobe-shi Hyogo 651-0073 (JP); Ishihara, Hideki, Kobe-shi Hyogo 651-0073 (JP); Yamagata, Koichi, Kobe-shi Hyogo 651-0073 (JP); Nakayama, Satoshi, Kobe-shi Hyogo 651-0073 (JP)
(74) Representative: HOFFMANN EITLE

(57) **Abstract**

A column is described, as representative one of which includes: a disposable column used in a measuring sample preparator, comprising: a support immobilized a substance capable of conjugating a protein, a support holding part for holding the support, a fluid connecting part for connecting to the sample preparator, and a liquid storing part for receiving a liquid through the support held by the support holding part and storing the liquid to be collectively from the top.

## Description

### FIELD OF THE INVENTION

The present invention relates to a column, a sample preparation apparatus using the column, and auto analyzer.

### BACKGROUND

Sample mini columns are known which can bind an analysis object material in a sample to a substructure within the column by having a funnel for storing sample at the top end of a column, introducing sample into the funnel, and injecting sample into the column by sealing the top part of the funnel and increasing the pressure (for example, refer to WO98/03264).International Laid-Open Patent Publication No. WO98/03264 discloses an auto analyzer that injects a solvent into a column through an inlet nozzle to dissociate an analyte from a substructure by connecting the inlet nozzle to the top end of the column, and introducing the solvent containing the analyte into a detection device through an outlet nozzle connected to the bottom end of the column so as to automatically detect the analyte in order to analyze an analyze analyte material held in a column.

This auto analyzer is provided with an inlet nozzle and outlet nozzle for each of a plurality of columns. The inlet nozzle is connected to a pump via a rotating valve, and liquid is fed into an object column from the pump via the rotating valve and inlet nozzle by switching the rotating valve. The outlet nozzle is connected to a detecting device through a rotating valve, and liquid is fed to the detecting device from the object column via the outlet nozzle and rotating valve.

In the above auto analyzer with columns, however, a plurality of columns are provided, and the flow paths from the pump to the detection device via the columns are complicated in order to analyze an analyte material held in a different column switching the flow path from a column using rotating valves, such that in order to analyze an analyte material in a different column, the residue of the previous analyte remaining in the complex of flow paths must be washed therefrom.

### SUMMARY

The scope of the present invention is defined solely by the appended claims, and is not affected to any degree by the statements within this summary.

In view of this information, the present invention provides a column and sample preparation apparatus and an auto analyzer having simple constructions appropriate for auto analyzers.

A first aspect of the present invention is a disposable column used in a measuring sample preparator, and includes: a support immobilized a substance capable of conjugating a protein, a support holding part for holding the support, a fluid connecting part for connecting to the sample preparator, and a liquid storing part for receiving a liquid through the support held by the support holding part and storing the liquid to be collectively from the top.

A second aspect of the present invention is a liquid sample preparation apparatus, and includes: a mounting part for mounting a column comprising a support holding part for holding a support immobilized a substance capable of conjugating a protein, a liquid storing part communicating with the support holding part and for storing a liquid to be collectively from the top, and a connecting part for connecting the mounting part, and a fluid driving part for driving a liquid in the column mounted on the mounting part.

A third aspect of the present invention is an auto analyzer, and includes: a mounting part for mounting a column comprising a support for isolating a target substance in a first liquid sample, a support holding part for holding the support, and a liquid storing part for collecting a second liquid sample prepared when a specific fluid passes through the support and storing the second liquid sample to be collectively from the top, a collecting part for collecting the second liquid sample stored in the liquid storing part of the column mounted on the mounting part, and an analyzing part for analyzing the collected second liquid sample and obtaining information related to the target substance.

### BRIEF DESCRIPTION OF THE DRAWINGS

Fig. 1 is a top view of the column of the present invention;

Fig. 2 is a side view of the column of the present invention;

Fig. 3 is a cross sectional view on the A-A view of Fig. 1;

Fig. 4 is a perspective view of the sample preparing unit of the present invention;

Fig. 5 is a top view of a fluid manifold of the present invention;

Fig. 6 is a cross sectional view on the B-B view of Fig. 5;

Fig. 7 is a fluid circuit diagram of the sample preparing unit shown in Fig. 4;

Fig. 8 is a perspective view of the auto measuring mechanism of the present invention;

Fig. 9 is a block diagram showing the control system for controlling the auto measuring mechanism of the auto measuring apparatus;

Fig. 10 is a flow chart showing the operation of the control system of Fig. 9;

Fig. 11 is a block diagram showing the hardware structure of the controlling part of the auto measuring apparatus;

Fig. 12 is a cross sectional diagram showing a column with caps installed on the top and bottom openings;

Fig. 13 is a cross sectional view showing the bottom cap removed from the column of Fig. 12; and

Fig. 14 is a flow chart showing the operation of another embodiment of the control system shown in Fig. 9.

### DETAILED DESCRIPTION OF THE PREFERRED EMBODIMENT

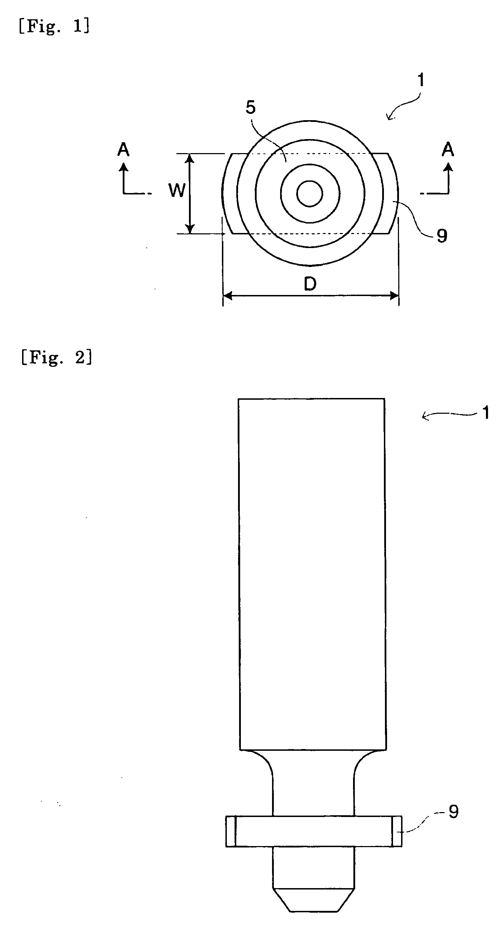

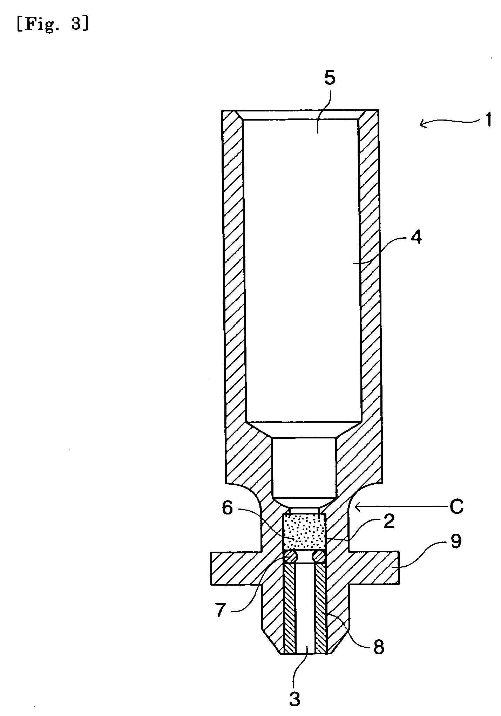

Although the present invention is described in details hereinafter based on the embodiments shown in the drawings, the present invention is not limited to these embodiments.
Column
Fig. 1 is a top view of a column used in the present embodiment, Fig. 2 is a side view of the column shown in Fig. 1, and Fig. 3 is a cross sectional A-A view of the column shown in Fig. 1.
As shown in the drawings, the column 1 is cylindrical in shape and made of vinyl chloride resin, and has in its interior a support holding part 2 for holding a support 6 used for isolating a target substance in a liquid sample, a liquid introducing part 3 for introducing a liquid sample to the support holding part 2, and a liquid storing part 4 for receiving and storing a liquid sample from the support holding part 2. The column 1 is a precision cut, solid molded part of vinyl chloride resin. When mass produced, solid molding may also be accomplished by a molding process. Polyprene resin and polyacetal resin with scant protein absorption may be used instead of vinyl chloride resin. The column 1 is disposable as the column 1 is composed of above material.

The liquid storing part 4 of the column 1 has a 300 µL capacity, and a top of the liquid storing part 4 has an opening 5 for collecting liquid sample by an external source. The column has a diameter of 10 mm, and a length of 35 mm. A column diameter of 1~15 mm is desirable, as is a column length of 10~50 mm. The support is a cylindrical monolithic silica gel measuring 2.7 mm in diameter by 3 mm in height. The monolithic silica gel has different particle supports, and has a structure of a three-dimensional network framework with integrated empty spaces. The support 6 is inserted into the support holding part 2 from the bottom opening, and supported by an elastic pressure provided by an anchor pipe 8 through an O-ring 7.
The anchor pipe 8 is press-fitted from the bottom opening of the column 1, and the pipe 8 and the hole of the O-ring 7 form a liquid introducing part 3.
The bottom end of the column 1 is provided with a charging flange 9 for charging and anchoring the column 1 in a sample preparing unit described later. The flange 9 is a planed flange with horizontal notch, such that the bilateral width of the disk-like flange of diameter D is (W<D).

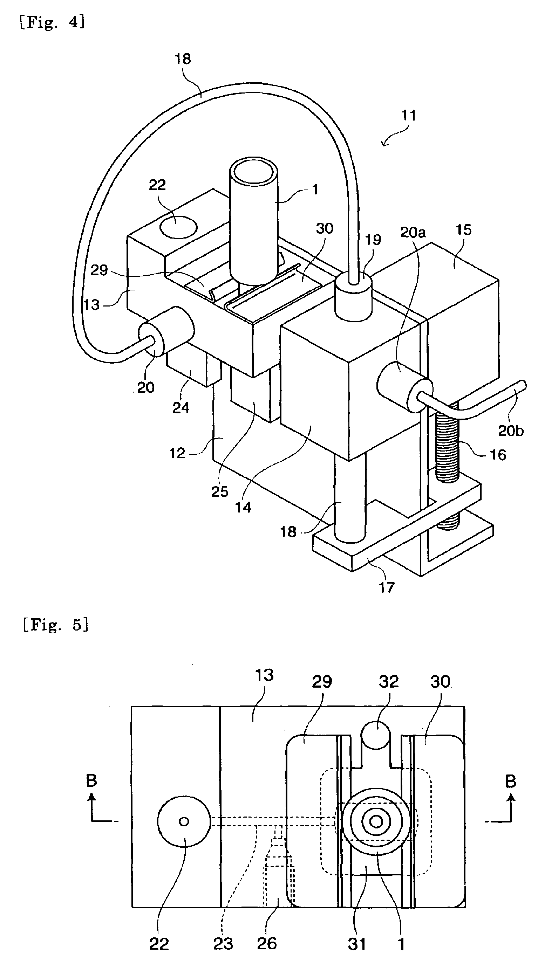

Sample preparing unit
Fig. 4 is a perspective view of the sample preparing unit of the present embodiment.
As shown in the drawing, a sample preparing unit 11 is provided with an L-shaped support plate 12, and fixedly attached to the support plate 12 are a fluid manifold 13, syringe 14, and speed reducing stepping motor 15.
A screw shaft 16 is connected to the output shaft of the stepping motor 15. A drive arm 17, which screws onto the screw shaft 16, is connected to the tip of a piston 18 of the syringe 14. When the screw shaft 16 is rotated by the stepping motor 15, the piston 18 is moved vertically. The syringe 14 and fluid manifold 13 are connected via delivery tube 18 through connectors 19 and 20. The syringe 14 is also connected to a liquid holding chamber 34 described later by a delivery tube 20b via a connector 20a. The syringe 14, stepping motor 15, screw shaft 16, drive arm 17, and piston 18 configure a syringe pump.

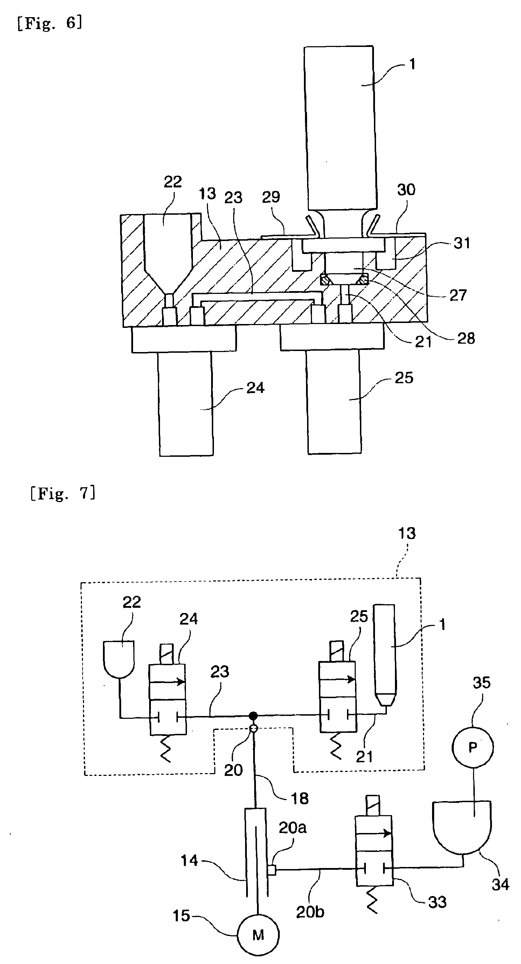

Liquid Manifold
Fig. 5 is a top view of the fluid manifold, and Fig. 6 is a cross sectional B-B view of Fig. 5. As shown in these drawings, the fluid manifold 13 is formed of vinyl chloride resin, and is provided with a column connecting part 21 for connecting to the liquid introducing part 3 of the column 1, and a liquid sample receiving part 22 for receiving a liquid sample.
The fluid manifold 13 is provided with an internal flow path 23, and at the bottom surface is provided with an electromagnetic valve 24 that operates between the liquid sample introducing part 22 and the flow path 23, and an electromagnetic valve 25 that operates between the flow path 23 and the column connecting part 21. The fluid manifold 13 has a threaded connector hole 26 (Fig. 5) for connecting the connector 20 to the side surface, and the threaded hole 26 connects to the flow path 23.

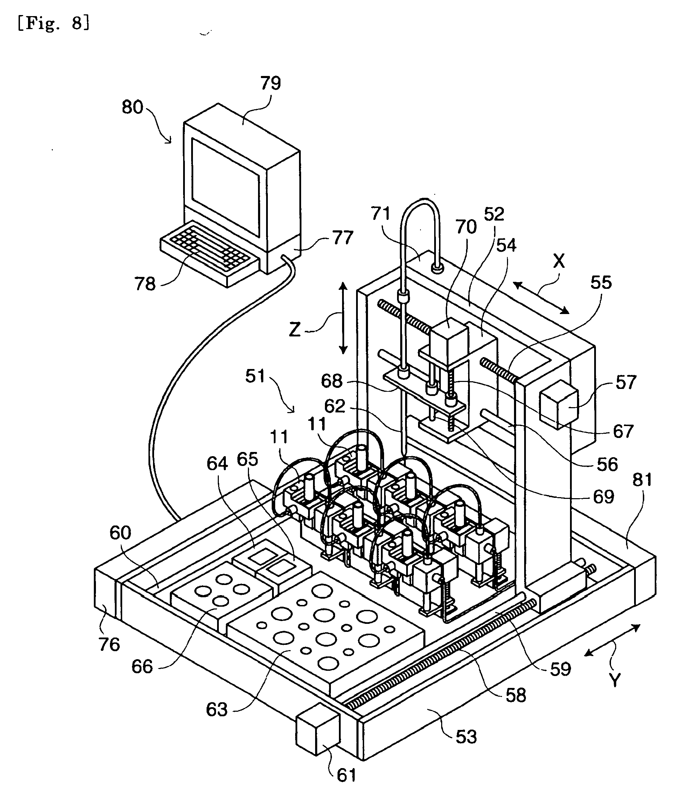

Fig. 7 is a flow circuit diagram of the sample preparing unit 11, and shows the syringe 14 connected to the fluid manifold 13 via the connector 20. The liquid holding chamber 34 is connected to the syringe 14 via an electromagnetic valve 33 provided on the fluid operating part 71 (refer to Fig. 8) described later, and a positive pressure is applied from a positive pressure source 35 to the liquid holding chamber 34.

The method by which the column 1 is loaded in the fluid manifold 13 is described below.
As shown in Figs. 5 and 6, a column receiving concavity 27 is formed on the top surface of the fluid manifold 13 in order to accommodate the bottom end of the column 1, and an O-ring 28 is fitted on the circumference of the bottom surface while allowing passage through the center of the bottom of the concavity 27 to the column connecting part 21. Attached to the top surface of the fluid manifold 13 are two pressing plates 29 and 30 having L-shaped cross sections are attached in parallel with a gap wider than W and narrower than D therebetween as shown in Fig. 1, and centered on the column receiving concavity 27.

The column 1 is loaded in the column receiving concavity 27 so that the flange 9 passes between the pressing plates 29 and 30, and rotated 90 degrees in either a clockwise or counter clockwise direction. Thus, the D diameter part of the flange 9 engages the pressing plates 29 and 30, and the flange 9 is attached by the pressing plates 29 and 30 via the elasticity of the O-ring 28. To remove the column 1, the column 1 is pressed and rotated 90 degrees in either left or right directions.

When the column 1 is loaded in the fluid manifold 13 of the sample preparing unit 11, the concavity 27 of the manifold 13 is filled with liquid to prevent the introduction of air bubbles, and fluid may overflow depending on the capacity when the tip of the column 1 is inserted in the concavity 27, as described later. In order to prevent this liquid from flowing to the margins, an overflow storage concavity 31 (refer to Figs. 5 and 6) is formed at the perimeter of the column loading concavity 27, and a concavity 32 which is deeper than the concavity 31 is provided at part of the concavity 31.
When the sample preparing unit 11 is installed in an auto measuring mechanism as described later, the overflow liquid is suctioned and drained from the concavity 32 by a dispensing pipette 62.

### Auto Measuring Apparatus

Fig. 8 is a perspective view of an auto measuring apparatus of the present embodiment. The auto measuring apparatus is configured by an auto measuring mechanism 51, and a personal computer 80 connected to the auto measuring mechanism so as to enable communication.
The auto measuring mechanism 51 is provided with a frame 52 for moving a pipette in the X direction, a frame 53 for moving a pipette in the Y direction, and a block 54 for moving a pipette in the Z direction.
The frame 52 is provided with screw shaft 55 for moving the block 54 in the arrow X direction, a slide shaft 56 for supporting and oscillating the block 54, and a stepping motor 57 for rotating the screw shaft 55.
The frame 53 is provided with a screw shaft 58 for moving the frame 52 in the arrow Y direction, parallel slide shafts 59 and 60 for supporting and oscillating the frame 52, and a stepping motor 61 for rotating the screw shaft 58.

The block 54 is provided with a screw shaft 67 for moving the arm 68 that supports the dispensing pipette 62 in the arrow Z direction, slide shaft 69 for supporting and oscillating the arm 68, and a stepping motor 70 for rotating the screw shaft 67.
Within the frame 52 are provided six sample preparing units 11, a specimen/reagent placement part 63 for storing specimen containers and reagent containers at appropriate temperatures, washing part 64 for washing the dispensing pipette 62, waste part 65 for accommodating waste fluid, and a detecting part 66 for detecting a placed detection container. At the back part of the frame 52 is provided a fluid operating part 71 for operating the fluids, and which is connected to the washing part 64, and each sample preparing unit 11 and the like. The fluid operating part 71 is provided with electromagnetic valves 24 and 25 of each of the sample preparing units 11, electromagnetic valve 33 for controlling the fluid when fluid is loaded in the syringe from the liquid storing chamber, electromagnetic valves for controlling fluid when liquid is suctioned and discharged by the dispensing pipette 62, electromagnetic valves for controlling fluid when waste fluid is suctioned from the dispensing pipette in the waste part 65, and electromagnetic valves for controlling fluid when washing the dispensing pipette in the washing part 64.

The auto measuring mechanism 51 is provided with a liquid holding chamber 34, positive pressure source 35, and at the back is provided with a receiving unit accommodating a washing liquid tank 73 described later, waste tank 74, pure water tank 75.
Furthermore, at the side of the frame 53 is provided a drive circuit 76 for supplying drive signals to each of the sample preparing units 11, specimen/reagent placement part 63, stepping motors 57, 61, 70, and fluid operating part 71.
The personal computer 80 is provided with a control part 77 connected to the drive circuit 76, input part 78 for inputting data and the like to the control part 77, and a display part 79 for displaying analysis results and the like.

The structure of the control part 77 of the personal computer 80 is described below. The control part 77 is provided with a CPU 91a, ROM 91b, RAM 91c, I/O interface 91d, and image output interface 91e. The ROM 91b stores an operating system, control programs for controlling the operations of the apparatus, and data needed for the execution of the control programs. The CPU 91a loads the control program into the RAM 91c, or directly executes the control program from the ROM 91b. Thus, the result data processed by the CPU 91a are transmitted to the drive circuit 76 of the auto measuring mechanism 51 through the I/O interface 91d, and the data requiring processing by the CPU 91a is received from the drive circuit 76 of the auto measuring mechanism 51 through the I/O interface 20d. The CPU 91a controls the drive circuit 76 of the auto measuring mechanism 51 by executing the control program. The CPU 91a calculates analysis data reflecting the activity based on the fluorescent light intensity obtained by the detecting part 66 in a detecting step described later, and displays the analysis data on the display part 79.

### Control System

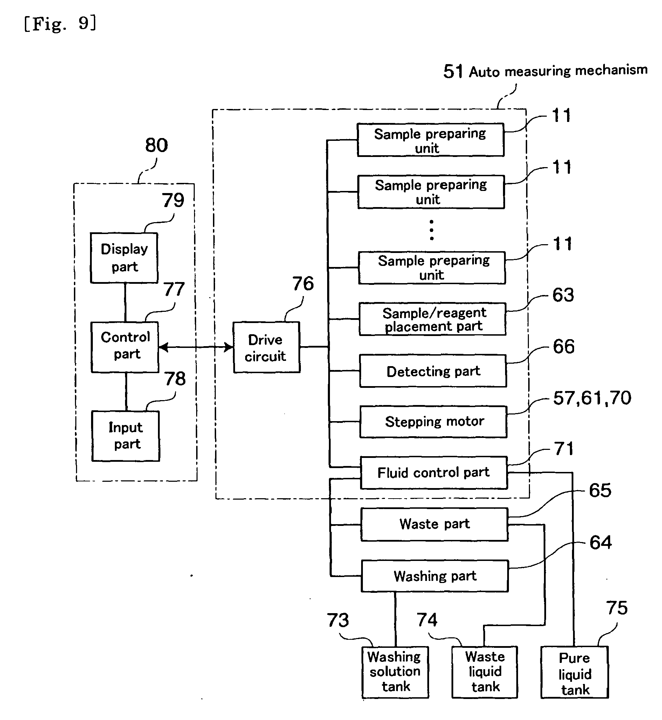

Fig. 9 is a block diagram of the control system for controlling the auto measuring mechanism 51 of the auto measuring apparatus shown in Fig. 8. This control system is provided with a drive circuit 76 that has driver circuits for drive each part of the auto measuring mechanism 51, as shown in the drawing. The control part 77 for controlling the drive circuit 76 and analyzing detection results from the detecting part 66, the input 78 for inputting data and the like to the control part 77, and the display part 79 for displaying analysis results and the like analyzed by the control part 77.
The control part 77 outputs drive signals for driving the stepping motor 15 of each of the sample preparing units 11, drive signals for temperature adjustment of the specimen/reagent placement part 63, drive signals for driving the stepping motors 57, 61, and 70, and drive signals for driving the electromagnetic valves of the fluid operating part 71 from the drive circuit 76 by controlling the drive circuit 76. The control part 77 also acquires detection signals from the detecting part 66 through the drive circuit 76.
The washing solution tank 73 for supplying the washing solution is connected to the washing part 64, the waste liquid tank 74 for accommodating waste liquid is connected to the waste part 65, and a pure water tank 75 for supplying pure dilution water for the specimens and reagents is connected to the fluid operating part 71.

### Measurement Preparation

When starting a measurement, a stock solution is preloaded in the fluid manifold 13 of the sample preparing unit 11 as described below. In the flow path shown in Fig. 7, first, stock solution is introduced to the syringe 14 from the stock solution chamber 34 by opening the electromagnetic valves 24 and 33, and the stock solution flows to the liquid sample receiving part 22 via the electromagnetic valve 24. Then, the electromagnetic valves 24 and 33 are closed and the electromagnetic valves 25 and 33 are opened, and stock solution flows from the stock solution chamber 34 and is delivered to the column receiving concavity 27 via the electromagnetic valve 33, syringe 14, and electromagnetic valve 25, such that the stock solution fills the concavity 27.
Thereafter, the electromagnetic valves 25 and 33 are closed.

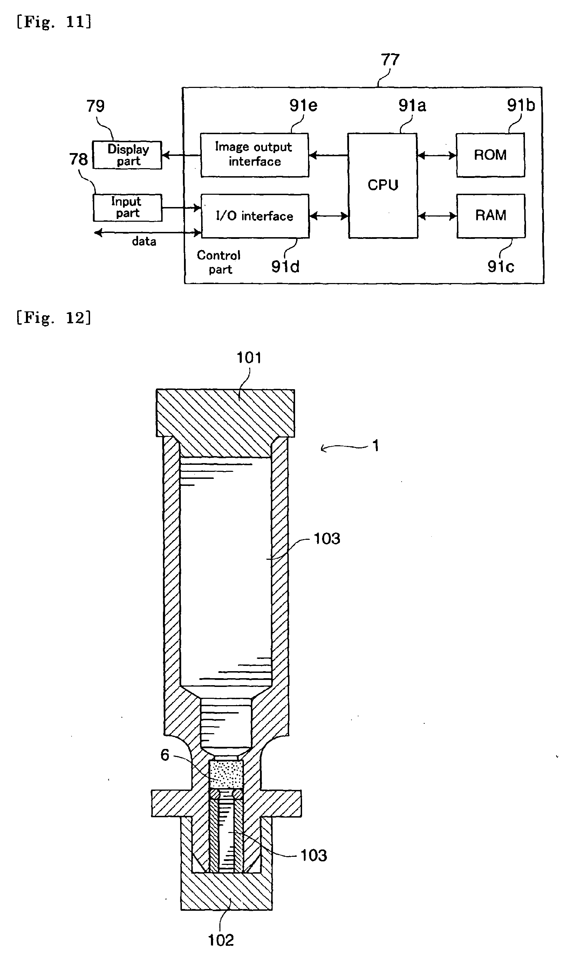

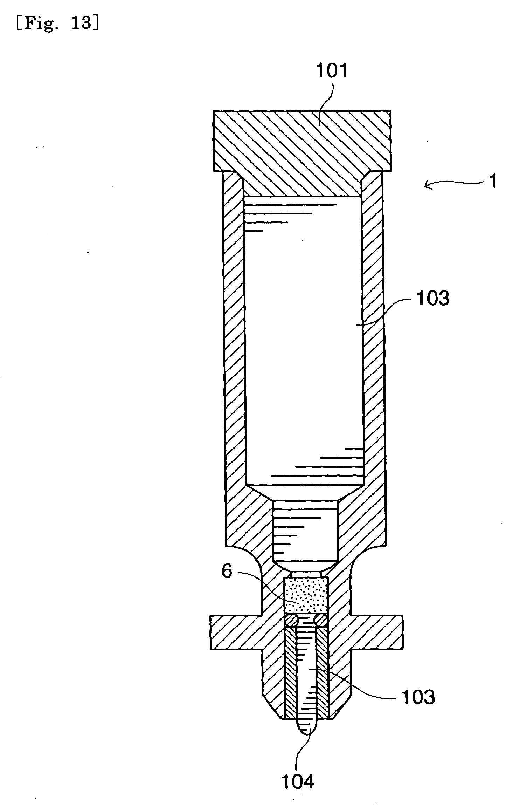

In this condition, the column 1 is mounted.
An antibody that specifically bonds to the enzyme that is the activity measurement object is solid phased beforehand in the support (monolithic silica gel) within the column 1. Then, stock solution 103 is loaded in the column 1 so as to prevent any contact of the antibody with the air, and caps 101 and 102 are respectively attached to the top and bottom of the column 1 which is then sealed (Fig. 12). First, the bottom cap 102 of the column 1 is removed, and brought near the column loading concavity 27 of the sample preparing unit 11. At this time, a droplet 104 forms at the tip due to the weight of the liquid in the column 1 (Fig. 13). Then, the droplet 104 at the tip of the column 1 and the liquid filling the column loading concavity 27 come into contact as the column 1 is inserted into the concavity 27, whereupon the column 1 is rotated 90 degrees and fixed in place. Thereafter, the top cap 101 of,the column 1 is removed. Thus, measurement preparation is completed.

### Measurement Operation

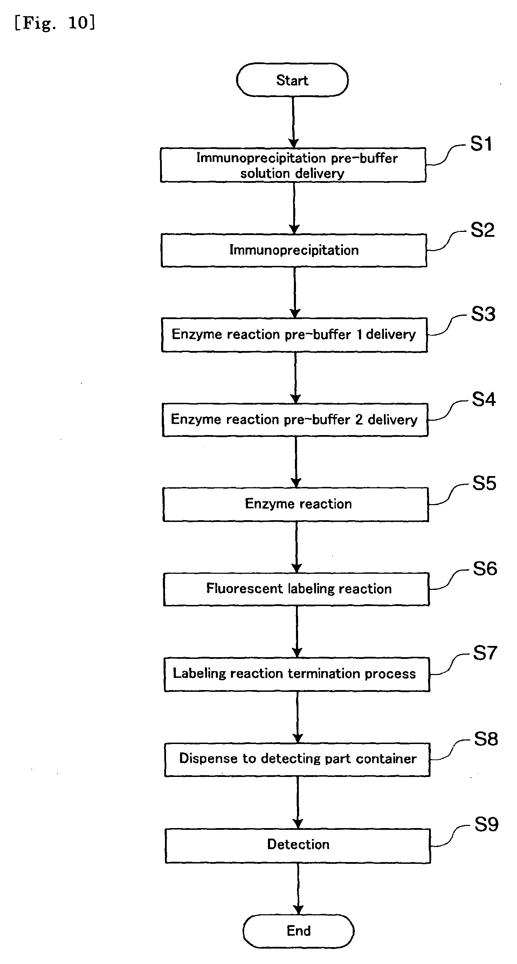

After the measurement preparation is completed, measurement is started by pressing the start key on the input part 78 (keyboard) of the personal computer 80. The measurement operation is described below using the flow chart of Fig. 10.

### 1. Immunoprecipitation Pre-buffer Solution Delivery

(1) The dispensing pipette 62 is inserted into the liquid storing part 4 to a fixed depth C (refer to Fig. 3), the stock solution within the liquid storing part 3 is suctioned and discharged to the waste part 65.
(2) The exterior and interior of the dispensing pipette 62 is washed by the washing part 64.
(3) 100 µL of immunoprecipitation pre-buffer is suctioned from the specimen/reagent placement part 63 within the apparatus, and injected to the sample liquid receiving part 22 of the fluid manifold 13.
(4) The electromagnetic valve 24 is opened, and 100 µL immunoprecipitation pre-buffer is suctioned at a rate of 100 µL/min by the syringe pump, the electromagnetic valve 24 is closed and the electromagnetic valve 25 is opened, and the pre-buffer is discharged to the column 1 at a rate of 100 µL/min, then the electromagnetic valve 25 is closed.
(5) The dispensing pipette 62 is inserted into the liquid storing part 4 of the column 1 to a fixed depth C, the discharged liquid is suctioned through the column 1, and discharged to the waste part 65.
(6) The dispensing pipette 62 is washed by the washing part 64.

### 2. Immunoprecipitation (step S2)

(1) 150 µL of specimen is suctioned from the specimen/reagent placement part 63, and injected into the sample liquid receiving part 22 of the fluid manifold 13.
(2) The dispensing pipette 62 is washed by the washing part 64.
(3) The electromagnetic valve 24 is opened, and 150 µL of specimen is suctioned at a rate of 100 µL/min by the syringe pump, and thereafter suctioning temporarily stops.
(4) Since the remaining specimen flows into the flow path 23 (Fig. 6), 30 µL of washing solution is dispensed into the sample liquid receiving part 22 by the dispensing pipette 62.
(5) 30 µL of washing solution is suctioned by the syringe pump at a rate of 100 µL/min.
(6) The electromagnetic valve 24 is closed and the electromagnetic valve 25 is opened, and 50 µL of the liquid is delivered to the column 1 at a rate of 50 µL/min by the syringe pump is temporarily stopped.
(7) Since the 50 µL discharged to the liquid storing part 4 is the immunoprecipitation pre-buffer that remained within the column 1, the dispensing pipette 62 is inserted into the liquid storing part 4 of the column 1 to a fixed depth C, the discharged liquid is suctioned, and discharged to the waste part 5.
(8) 130 µL of the liquid is delivered to the column 1 at a rate of 50 µL/min by the syringe pump. The target protein contained in the specimen binds to the support 6 as an immunoreaction begins in the support 6.
(9) The dispensing pipette 62 is inserted into the liquid storing part 4 of the column 1 to a fixed depth C, and the liquid is suctioned and discharged to the waste part 65. Thus, after the reaction, the specimen can be collected and reused as the specimen in another column 1.
(10) The dispensing pipette 62 is washed by the washing part 64.

### 3. Enzyme Reaction Pre-buffer 1 Solution Delivery (step S3) Enzyme Reaction Pre-buffer 1 Solution Delivery (step S3)

(1) 100 µL of enzyme reaction pre-buffer 1 is suctioned from the specimen/reagent placement part 63, and injected into the sample liquid receiving part 22 of the fluid manifold 13.
(2) The dispensing pipette 62 is washed by the washing part 64.
(3) The electromagnetic valve 24 is opened and the electromagnetic valve 25 is closed, and 100 µL of enzyme reaction pre-buffer 1 is suctioned at a rate of 100 µL/min by the syringe pump and temporarily stopped.
(4) The electromagnetic valve 24 is closed and the electromagnetic valve 25 is opened, and 100 µL of liquid is delivered to the column 1 at a rate of 100 µL/min.
(5) The dispensing pipette 62 is inserted into the liquid storing part 4 of the column 1 to a fixed depth C, and the liquid is suctioned and discharged to the waste part 65.
(6) The dispensing pipette 62 is washed by the washing part 64.

### 4. Enzyme Reaction Pre-buffer 2 Solution Delivery (step S4)

(1) 100 (L of enzyme reaction pre-buffer 2 is suctioned from the specimen/reagent placement part 63, and injected into the sample liquid receiving part 22 of the fluid manifold 13.
(2) The dispensing pipette 62 is washed by the washing part 64.
(3) The electromagnetic valve 24 is opened and the electromagnetic valve 25 is closed, and 100 (L of enzyme reaction pre-buffer 2 is suctioned at a rate of 100 µL/min by the syringe pump and temporarily stopped.
(4) The electromagnetic valve 24 is closed and the electromagnetic valve 25 is opened, and 100 µL of liquid is delivered to the column 1 at a rate of 100 µL/min.
(5) The dispensing pipette 62 is inserted into the liquid storing part 4 of the column 1 to a fixed depth C, and the liquid is suctioned and discharged to the waste part 65.
(6) The dispensing pipette 62 is washed by the washing part 64.

### 5. Enzyme Reaction (step S5)

(1) 100 µL of substrate solution is suctioned from the specimen/reagent placement part 63, and injected into the sample liquid receiving part 22 of the fluid manifold 13.
(2) The dispensing pipette 62 is washed by the washing part 64.
(3) The electromagnetic valve 24 is opened and the electromagnetic valve 25 is closed, and 100 µL of substrate solution is suctioned at a rate of 100 µL/min by the syringe pump and temporarily stopped.
(4) The electromagnetic valve 24 is closed and the electromagnetic valve 25 is opened, and 100 µL of liquid is delivered to the column 1 at a rate of 100 (L/min.
(5) Since the 50 µL discharged to the liquid storing part 4 is enzyme reaction pre-buffer 2 that remained in the column 1, the dispensing pipette 62 is inserted into the liquid storing part 4 of the column 1 to a fixed depth C, and the liquid is suctioned and discharged to the waste part 65.
(6) The dispensing pipette 62 is washed by the washing part 64.
(7) 50 µL of liquid is delivered to the column 1 at a rate of 10 µL/min by the syringe pump. An enzyme reaction starts between the substrate in the substrate solution and the target enzyme trapped in the support 6. As a result, a product reflecting the activity of the target enzyme is extracted to the liquid storing part 4.
Since the enzyme reaction was sufficiently produced, the substrate solution repeatedly delivered by the support 6 at an increased flow rate,

### 6. Fluorescent labeling reaction (step S6)

(1) 20 µL of fluorescent labeling reagent is suctioned from the specimen/reagent placement part 63, and injected into the liquid storing part 4 of the column 1.
(2) The dispensing pipette 62 is inserted into the liquid storing part 4 and repeatedly suctioned and discharged to mix the contents.
(3) The dispensing pipette 62 is washed by the washing part 64.
(4) The contents are allowed to stand for 20 minutes while the product of the enzyme reaction reacts with the fluorescent labeling reagent.

### 7. Process for Terminating the Labeling Reaction (step S7)

(1) 200 µL of labeling reaction terminating reagent is suctioned from the reagent placement part 63, and injected into the liquid storing part 4 of the column 1.
(2) The dispensing pipette 62 is washed by the washing part 64.
(3) The contents are allowed to stand for 3 minutes while the surplus fluorescent labeling reagent reacts with the labeling reaction terminating reagent.

### 8. Dispensing to the Detecting Apparatus Container (step S8)

(1) The dispensing pipette 62 is inserted into the liquid storing part 4, and suctions 50 µL of the produce of the fluorescent labeling process.
(2) The dispensing pipette 62 is moved to the container of the detecting part 66 and discharged the liquid.
(3) The dispensing pipette 62 is washed by the washing part 64.

### 9. Detection (step S9) 9. Detection (step S9)

(1) The fluorescent intensity of the product is measured by the detecting part 66.
(2) Numeric data reflecting the activity is calculated by the control part 77 from the measured fluorescent intensity.
Thus, the enzyme activity of the target enzyme contained in the specimen is measured.

Another embodiment of the enzyme activity measurement of a target enzyme contained in a specimen using the auto measuring apparatus is described below.

### Measurement Preparation

When starting a measurement, a stock solution is preloaded in the fluid manifold 13 of the sample preparing unit 11 as described below. In the flow circuit shown in Fig. 7, first, stock solution is introduced to the syringe 14 from the stock solution chamber 34 by opening the electromagnetic valves 25 and 33, and the stock solution flows to the column receiving concavity 27 via the electromagnetic valve 25, such that the stock solution fills the column receiving concavity 27 and overflows from the concavity 27 and is collected and stored in a collecting cavity 32 through a cavity 31. Then, stock solution is suctioned and discharged by the dispensing pipette 62 from the cavity 32. The stock solution collected in the cavity 27 is suctioned and discharged by the dispensing pipette 62, such that the stock solution fills the space to the open end of the column connecting part 21. Thereafter, the electromagnetic valves 25 and 33 are closed.
Next, the electromagnetic valve 25 is opened, and approximately 16 µl of air is suctioned from the column connecting part 21 by the syringe pump. Thereafter, the syringe pump is stopped, and the electromagnetic valve 25 is closed.
Then, approximately 150 µl of stock solution is injected into the column receiving concavity 27 by the dispensing pipette 62. An air gap is formed within the column connecting part 21.

In this condition, the column 1 is mounted.
An antibody that specifically bonds to the enzyme that is the activity measurement object is solid phased beforehand in the support (monolithic silica gel) within the column 1. Then, stock solution 103 is loaded in the column 1 so as to prevent any contact of the antibody with the air, and caps 101 and 102 are respectively attached to the top and bottom of the column 1 which is then sealed (Fig. 12). First, the bottom cap 102 of the column 1 is removed, and brought near the column loading concavity 27 of the sample preparing unit 11. At this time, a droplet 104 forms at the tip due to the weight of the liquid in the column 1 (Fig. 13). Then, the droplet 104 at the tip of the column 1 and the liquid filling the column loading concavity 27 come into contact as the column 1 is inserted into the concavity 27, whereupon the column 1 is rotated 90 degrees and fixed in place. Thereafter, the top cap 101 of the column 1 is removed. Thus, measurement preparation is completed.

### Measurement Operation

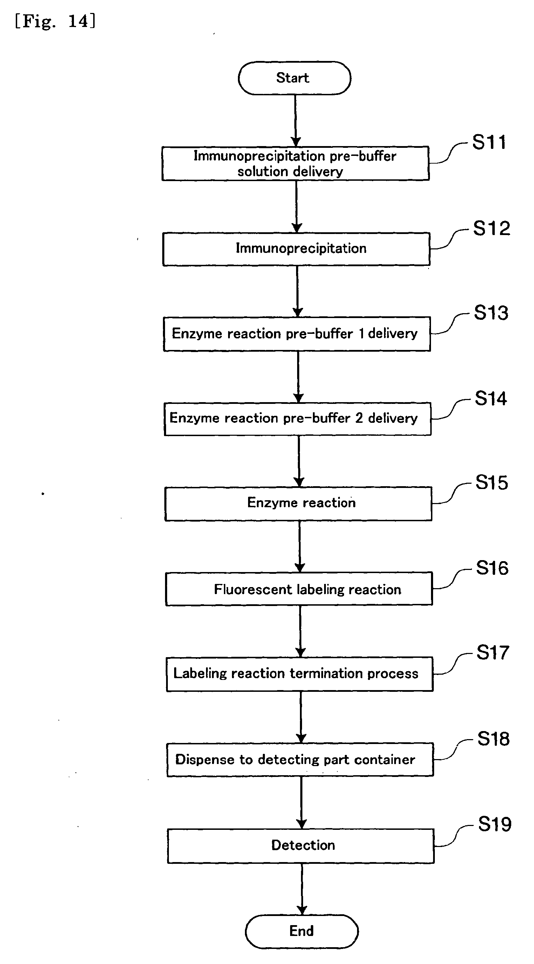

After the measurement preparation is completed, measurement is started by pressing the start key on the input part 78 (keyboard) of the personal computer 80. The measurement operation is described below using the flow chart of Fig. 14.

### 1. Immunoprecipitation Pre-buffer Solution Delivery (step S11)

(1) The dispensing pipette 62 is inserted into the liquid storing part 4 of the column 1 to a fixed depth C (refer to Fig. 3), and stock solution is suctioned from the liquid storing part 4 and discharged to the waste part 65.
(2) The exterior and interior of the dispensing pipette 62 is washed by the washing part 64.
(3) 100 µL of pre immunoprecipitation pre-buffer is suctioned from the specimen/reagent placement part 63 within the apparatus, and injected to the liquid storing part 4 of the column 1.
(4) The electromagnetic valve 25 is opened, and 100 µL immunoprecipitation pre-buffer is suctioned at a rate of 100 µL/min by the syringe pump, and the pre-buffer is discharged to the liquid storing part 4 of the column 1 at a rate of 100 µL/min, then the electromagnetic valve 25 is closed.
(5) The dispensing pipette 62 is inserted into the liquid storing part 4 of the column 1 to a fixed depth C, the discharged liquid is suctioned through the column 1, and discharged to the waste part 65.
(6) The dispensing pipette 62 is washed by the washing part 64.

### 2. Immunoprecipitation (step S12)

(1) 150 µL of specimen is suctioned from the specimen/reagent placement part 63, and injected into the sample liquid receiving part 22 of the fluid manifold 13.
(2) The dispensing pipette 62 is washed by the washing part 64.
(3) The electromagnetic valve 25 is opened, and 150 µL of specimen is suctioned at a rate of 10 µL/min by the syringe pump, and 150 µL of the specimen is discharged into the liquid storing part 4 of the column 1, then the electromagnetic valve 25 is closed. The target protein contained in the specimen binds to the support 6 as an immunoreaction begins in the support 6.
(4) The dispensing pipette 62 is inserted into the liquid storing part 4 of the column 1 to a fixed depth, and the liquid is suctioned and discharged to the waste part 65. Thus, after the reaction, the specimen can be collected and reused as the specimen in another column 1.
(5) The dispensing pipette 62 is washed by the washing part 64.

### 3. Enzyme Reaction Pre-buffer 1 Solution Delivery (step S13)

(1) 100 µL of enzyme reaction pre-buffer 1 is suctioned from the sample/reagent placement part 63 and injected into the liquid storing part 4 of the column 1.
(2) The dispensing pipette 62 is washed by the washing part 64.
(3) The electromagnetic valve 25 is opened, and 100 µL enzyme reaction pre-buffer is suctioned at a rate of 100 µL/min by the syringe pump, and 100 µL of the pre-buffer is discharged to the liquid storing part 4 of the column 1 at a rate of 100 µL/min, then the electromagnetic valve 25 is closed.
(5) The dispensing pipette 62 is inserted into the liquid storing part 4 of the column 1 to a fixed depth C, and the liquid is suctioned and discharged to the waste part 65.
(5) The dispensing pipette 62 is washed by the washing part 64.

### 4. Enzyme Reaction Pre-buffer 2 Solution Delivery (step S14)

(1) 100 µL of enzyme reaction pre-buffer 2 is suctioned from the sample/reagent placement part 63 and injected into the liquid storing part 4 of the column 1.
(2) The dispensing pipette 62 is washed by the washing part 64.
(3) The electromagnetic valve 25 is opened, and 100 µL enzyme reaction pre-buffer is suctioned at a rate of 100 µL/min by the syringe pump, and 100 µL of the pre-buffer is discharged to the liquid storing part 4 of the column 1 at a rate of 100 µL/min, then the electromagnetic valve 25 is closed.
(4) The dispensing pipette 62 is inserted into the liquid storing part 4 of the column 1 to a fixed depth C, and the liquid is suctioned and discharged to the waste part 65.
(5) The dispensing pipette 62 is washed by the washing part 64.

### 5. Enzyme Reaction (step S15)

(1) 100 µL of substrate solution is suctioned from the specimen/reagent placement part 63, and injected into the liquid storing part 4 of the column 1.
(2) The dispensing pipette 62 is washed by the washing part 64.
(3) The electromagnetic valve 25 is opened, and 100 µL of substrate solution is suctioned at a rate of 10 µL/min by the syringe pump, and 100 µL of the liquid is discharged into the liquid storing part 4 of the column 1, then the electromagnetic valve 25 is closed. An enzyme reaction starts between the substrate in the substrate solution and the target enzyme trapped in the support 6. As a result, a product reflecting the activity of the target enzyme is extracted to the liquid storing part 4.
   Since the enzyme reaction was sufficiently produced, the substrate solution may repeatedly delivered by the support 6 at an increased flow rate.

### 6. Fluorescent Labeling Reaction (step S16)

(1) 20 µL of fluorescent labeling reagent is suctioned from the specimen/reagent placement part 63, and injected into the liquid storing part 4 of the column 1.
(2) The dispensing pipette 62 is inserted into the liquid storing part 4 and repeatedly suctioned and discharged to mix the contents.
(3) The dispensing pipette 62 is washed by the washing part 64.
(4) The contents are allowed to stand for 20 minutes while the product of the enzyme reaction reacts with the fluorescent labeling reagent.

### 7. Labeling Reaction Termination Process (step S17)

(1) 200 µL of labeling reaction terminating reagent is suctioned from the sample/reagent placement part 63, and injected into the liquid storing part 4 of the column 1.
(2) The dispensing pipette 62 is washed by the washing part 64.
(3) The contents are allowed to stand for 3 minutes while the surplus fluorescent labeling reagent reacts with the labeling reaction terminating reagent.

### 8. Dispensing to the Detecting Apparatus Container (step S18)

(1) The dispensing pipette 62 is inserted into the liquid storing part 4, and suctions 50 µL of the produce of the fluorescent labeling process.
(2) The dispensing pipette 62 is moved to the container of the detecting part 66 and discharges the liquid.
(3) The dispensing pipette 62 is washed by the washing part 64.

### 9. Detection (step S19)

(1) The fluorescent intensity of the product is measured by the detecting part 66.
(2) Numeric data reflecting the activity is calculated by the control part 77 from the measured fluorescent intensity.
Thus, the enzyme activity of the target enzyme contained in the specimen is measured.

The sample is prepared, for example, by a general method that homogenizes and centrifuges biological tissues.
In the present invention, when a target enzyme is captured and the enzyme activity measured, sepharose beads and the like may be used instead of monolithic silica gel as the support placed in the column.
Furthermore, CDK-1 (cyclin-dependent protein kinase 1) is offered as an example of a target enzyme. When CDK-1 is the target enzyme, the antibody used will be CDK-1 antibody.

Examples of the liquids and reagents used in the measurement process are provided below.
Stock solution, washing solution
   Tris-HCL, pH 7.4, 25 mM
   NaCl, 150 mM
Immunoprecipitation pre-buffer
   Tris-HCL, pH 7.4, 50 mM
   Nonidet-P40, 0.1%
Enzyme reaction pre-buffer 1
   Nonidet-P40, 1%
   Tris-HCL, pH 7.4, 50 mM
   NaCl, 300 mM
Enzyme reaction pre-buffer 2
   Tris-HCL, pH 7.4, 50 mM
Substrate solution
   Tris-HCL, pH 7.4, 40 mM
   Triton X-100, 0.1%
   MgC12, 20 mM
   ATPγS-4Li, 2 mM
   Histone H1, 10 µg
Fluorescent labeling reagent
   5-lodoacetamide, 2 mM
   Fluorescein (5-IAF)
   DMSO (dimethyl sulfoxide)
   Tris-HCL, pH 7.4, 25 mM
   EDTA-2Na, 5 mM
Labeling reaction terminating reagent
   2ME (2-mercaptoethanol), 5%
   Tris-HCL, pH 7.4, 25 mM
   NaCl, 150 mM

Although a support having an antibody that specifically binds to the enzyme solid-phased beforehand was used in the present embodiments, the antibody may be fixed in the support by using a support capable of fixing an antibody that specifically binds to the enzyme, and flushing a liquid containing this antibody through the support.

Although a support for trapping enzyme in the support and measuring the activity of the enzyme is used in the above embodiments, an affinity chromatography support, ion exchange chromatography support, hydrophobic chromatography support, gel filtration support and reverse phase chromatography support and like supports used in chromatography may be used as a support for isolating proteins, nucleic acids, hormones, neural transmitting substances, and vitamins and the like.

## Claims

1. A disposable column used in a measuring sample preparator, comprising:
a support immobilized a substance capable of conjugating a protein
a support holding part for holding the support;
a fluid connecting part for connecting to the sample preparator; and
a liquid storing part for receiving a liquid through the support held by the support holding part and storing the liquid to be collectively from the top.

2. The column according to Claim 1, wherein the liquid storing part is provided with an opening.

3. The column according to Claim 1 or 2, further comprising:
a first stopper for sealing the fluid connecting part; and a second stopper for sealing the liquid storing part.

4. The column according to Claim 3, further comprising: a stock solution for preserving the support within the support, within the fluid connecting part, and within the liquid storing part.

5. A sample preparation apparatus comprising:
a mounting part for mounting a column comprising a support holding part for holding a support immobilized a substance capable of conjugating a protein, a liquid storing part communicating with the support holding part and for storing a liquid to be collectively from the top, and a connecting part for connecting the mounting part; and
a fluid driving part for driving a liquid in the column mounted on the mounting part.

6. The sample preparation apparatus according to Claim 5, wherein the fluid driving part transfers the liquid from the connecting part to the liquid storing part.

7. The sample preparation apparatus according to Claim 5 or 6, wherein the fluid driving part transfers the liquid from the liquid storing part to the connecting part.

8. The sample preparation apparatus according to any of Claims 5 - 7, wherein the fluid driving part is a pump.

9. An auto analyzer comprising:
a mounting part for mounting a column comprising a support for isolating a target substance in a first liquid sample, a support holding part for holding the support, and a liquid storing part for collecting a second liquid sample prepared when a specific fluid passes through the support and storing the second liquid sample to be collectively from the top;
a collecting part for collecting the second liquid sample stored in the liquid storing part of the column mounted on the mounting part; and
an analyzing part for analyzing the collected second liquid sample and obtaining information related to the target substance.

10. The auto analyzer according to Claim 9, wherein the column comprising a connecting part for connecting the mounting part, further comprising:
a fluid driving part for driving fluid in the column mounted on the mounting part.

11. The auto analyzer according to Claim 10, further comprising:
a controlling part for controlling the collecting part, the fluid driving part, and the analyzing part;
wherein the controlling part executes:
a step for passing the first liquid sample through a support and holding a target substance in the support, and transferring a liquid containing the isolated target substance from the first liquid sample to the liquid storing part by controlling the fluid driving part so as to transfer the first liquid sample containing the target substance to the column mounted on the mounting part;
a step for eliminating the liquid from the liquid storing part by controlling the collecting part so as to suction the liquid stored in the liquid storing part;
a step for preparing a second liquid sample by passing a predetermined liquid through the support holding the target substance, and transferring the prepared second liquid sample to the liquid storing part by controlling the fluid driving part so as to transfer the predetermined liquid to the column mounted on the mounting part;
a step for controlling the collecting part so as to suction the second liquid sample stored in the liquid storing part; and
a step for controlling the analyzing part so as to analyze the second liquid sample suctioned by the collecting part.

12. The auto analyzer according to Claim 10, further comprising:
a controlling part for controlling the collecting part, the fluid driving part, and the analyzing part;
wherein the controlling part executes:
a step for passing a first liquid sample through a support and holding a target substance in the support, and transferring a liquid containing the isolated target substance from the first liquid sample to the liquid storing part by controlling the fluid driving part so as to transfer fluid from the liquid storing part storing the first liquid sample containing the target substance to the support holding part and to transfer fluid from the support holding part to the liquid storing part;
a step for eliminating liquid from the liquid storing part by controlling the collecting part so as to suction liquid stored in the liquid storing part;
a step for storing a predetermined liquid in the liquid storing part by controlling the collecting part so as to supply a predetermined liquid to the liquid storing part;
a step for preparing a second liquid sample by passing the predetermined liquid through a support holding the target substance, and transferring the prepared second liquid sample to the liquid storing part by controlling the fluid driving part so as to transfer fluid from the liquid storing part storing to the support holding part and to transfer fluid from the support holding part to the liquid storing part;
a step for controlling the collecting part so as to suction the second liquid sample stored in the liquid storing part; and
a step for controlling the analyzing part so as to analyze the second liquid sample suctioned by the collecting part.

13. The auto analyzer according to any of Claims 9 - 12, wherein the collecting part includes a pipette;

14. The auto analyzer according to any of Claims 10 - 12, wherein the fluid driving part is a pump.

15. The auto analyzer according to Claim 9 or 13, wherein the target substance is an enzyme, the second liquid material is a product reflecting the activity of the enzyme, and the information related to the target substance is the enzyme activity.

16. The auto analyzer according to Claim 11 or 12, wherein the target substance is an enzyme, the predetermined liquid is a substrate, and the second liquid material is a product reflecting the activity of the enzyme.
